# EUROPEAN PATENT APPLICATION

(11) **EP 2 624 110 A1**
(43) Date of publication of application: **07.08.2013**
(21) Application number: 11828057.7
(22) Date of filing: 14.09.2011
(51) Int. Cl.: G06F 3/048

(54) **METHOD AND DEVICE FOR PLACING ICONS**

(30) Priority: 29.09.2010 CN 201010296481
(71) Applicant: Huawei Device Co., Ltd., Longgang District Shenzhen Guangdong 518129 (CN)
(72) Inventor: ZHANG, Ting, Guangdong 518129 (CN)
(74) Representative: Pfenning, Meinig & Partner GbR
(86) International application number: PCT/CN2011/079620
(87) International publication number: WO 2012/041161

(57) **Abstract**

Embodiments of the present invention disclose a method and an apparatus for placing icons, which relate to the field of handheld terminal devices and solve the problem where when there are many icons on a main menu or desktop, after the icons on the main menu or desktop are sorted according to initial letters, it is still difficult for a user to find a required program icon from the many icons. The technical solutions of the present invention include: obtaining a characteristic value of an application downloaded from a third party; and according to a preset mapping relationship between a characteristic value and a terminal icon category, placing icons of the application according to a terminal icon category corresponding to the characteristic value of the application. The method and the apparatus for placing icons according to the embodiments of the present invention can be used to place a downloaded icon on a desktop and main menu in a handheld terminal device.

## Description

This application claims priority to Chinese Patent Application No. 201010296481.7, filed with the Chinese Patent Office on September 29, 2010 and entitled "METHOD AND APPARATUS FOR PLACING ICON", which is incorporated herein by reference in its entirety.

### FIELD OF THE INVENTION

The present invention relates to the field of handheld terminal devices, and in particular, to a method and an apparatus for placing icons.

### BACKGROUND OF THE INVENTION

When a main menu or desktop is displayed on a screen of a handheld terminal device, the main menu or desktop contains icons corresponding to application programs stored in the handheld terminal device, where the icons are used as entries for a user to use corresponding application programs. As the functions of a handheld terminal device are being enhanced day by day, the amount of information stored in the handheld terminal device keeps increasing, and the main menu and desktop of the handheld terminal device is filled with more and more icons corresponding to local application programs and icons corresponding to third-party application programs, which makes it more and more difficult for a user to find a desired icon.

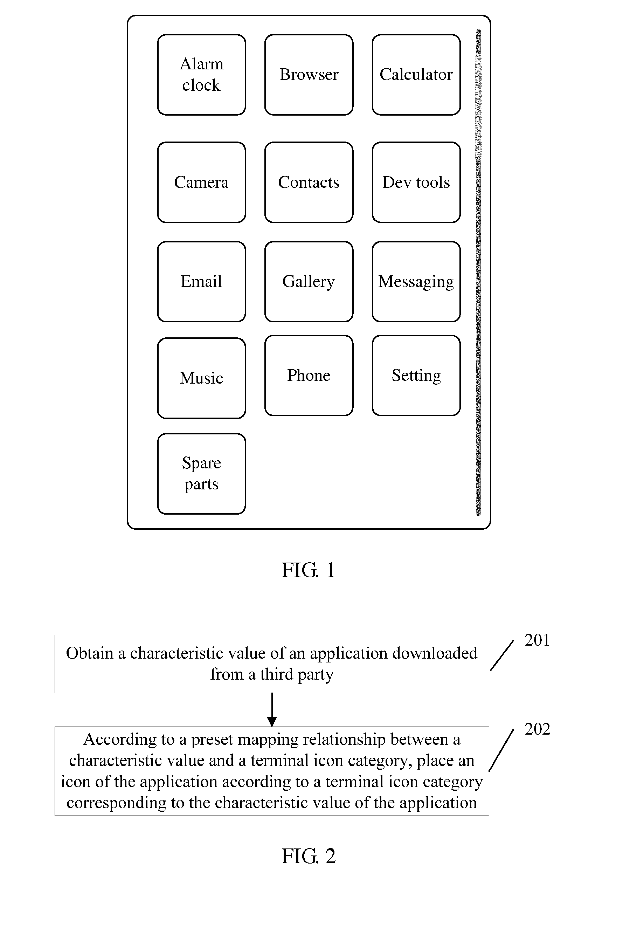

At present, as shown in FIG. 1, when a main menu is displayed on a screen of a handheld terminal device with an Android system, icons in the main menu are sorted in a grid according to initial letters according to the titles of the icons. Indeed, when a desktop is displayed on the screen of the handheld terminal device, icons on the desktop may also be sorted according to initial letters according to the titles of the icons.

When there are many icons on the main menu or desktop, after the icons on the main menu or desktop are sorted according to initial letters, it is still difficult for a user to find a required program icon from the many icons.

### SUMMARY OF THE INVENTION

Embodiments of the present invention provide a method and an apparatus for placing icons, so as to solve the problem that, when there are many icons on a main menu or desktop, after the icons on the main menu or desktop are sorted according to initial letters, it is still difficult for a user to find a required program icon from the many icons.

To achieve the above objective, embodiments of the present invention use the following technical solutions.

A method for placing icons includes: obtaining a characteristic value of an application downloaded from a third party; and according to a preset mapping relationship between a characteristic value and a terminal icon category, placing icons of the application according to a terminal icon category corresponding to the characteristic value of the application.

An apparatus for placing icons includes:
an obtaining unit configured to obtain a characteristic value of the application downloaded from a third party; and
a placing unit configured to place, according to a preset mapping relationship between a characteristic value and a terminal icon category, an icon of the application according to a terminal icon category corresponding to the characteristic value of the application obtained by the obtaining unit.

In embodiments of the present invention, a method and an apparatus for placing icons are provided to place an icon of an application according to a terminal icon category corresponding to a characteristic value of the application according to a preset mapping relationship between a characteristic value and a terminal icon category, so that icons are placed on a menu or desktop according to terminal icon categories. Therefore, an icon may be found according to the terminal icon category when it is looked for, a range for looking for the icon is reduced, and the time for looking for the icon is reduced, thereby solving the following problem in the prior art: if there are many icons on a main menu or desktop, and after the icons on the main menu or desktop are sorted according to initial letters, it is still difficult for a user to find a required program icon from the icons.

### BRIEF DESCRIPTION OF THE DRAWINGS

FIG. 1 is a schematic diagram of icons on a main menu displayed on a handheld terminal device in the prior art;

FIG. 2 is a flowchart of a method for placing icons according to an embodiment of the present invention;

FIG. 3 is a flowchart of a method for placing icons according to another embodiment of the present invention;

FIG. 4 is a flowchart of a step 301 in a method for placing icons shown in FIG. 3;

FIG. 5 is a screenshot of a current interface;

FIG. 6 shows a mapping relationship between a class in an original category of a third party and a category in a terminal;

FIG. 7 shows icons displayed on a screen according to a mapping relationship shown in FIG. 6;

FIG. 8 is a schematic structural diagram of an apparatus for placing icons according to an embodiment of the present invention;

FIG. 9 is a schematic structural diagram of an obtaining unit in an apparatus for placing icons shown in FIG. 8;

FIG. 10 is a schematic structural diagram of a recognizing subunit in an obtaining unit of an apparatus for placing icons shown in FIG. 9; and

FIG. 11 is a schematic structural diagram of a mobile phone terminal.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In order to solve the problem in the prior art where when there are many icons on a main menu or desktop, after the icons on the main menu or desktop are sorted according to initial letters, it is still difficult for a user to find a required program icon from the many icons, embodiments of the present invention provide a method and an apparatus for placing icons.

As shown in FIG. 2, a method for placing icons is provided by an embodiment of the present invention, including:

Step 201: Obtain a characteristic value of an application downloaded from a third party.

In the embodiment, a terminal may have a third-party application icon, such as the icon of the Google Market (google market). The icon may be clicked to allow the terminal to connect to a network and access a third party, and therefore, an application required by a user can be downloaded from the third party. The characteristic value may be an original icon category of the application on the third party, or may be an original classification path of the application on the third party.

Step 202: According to a preset mapping relationship between a characteristic value and a terminal icon category, place an icon of the application according to a terminal icon category corresponding to the characteristic value of the application.

In the embodiment, the application may be a functional application or be a widget application.

When the characteristic value is the original icon category of the application on the third party, the step 202 specifically includes:
according to a preset mapping relationship between an original icon category of the third party and a terminal icon category, placing the icon of the application according to a terminal icon category corresponding to the original icon category of the application.

When the characteristic value is the original classification path of the application on the third party, the step 202 specifically includes:
according to a preset mapping relationship between an original classification path of the third party and a terminal icon category, placing the icon of the application according to a terminal icon category corresponding to the original classification path of the application.

In the embodiment of the present invention, a method for placing icons is provided to place an icon of an application according to a terminal icon category corresponding to a characteristic value of the application according to a preset mapping relationship between a characteristic value and a terminal icon category, so that icons are placed on a menu or desktop according to terminal icon categories. Therefore, an icon may be found according to the terminal icon category when it is looked for, a range for looking for the icon is reduced, and the time for looking for the icon is reduced, thereby solving the following problem in the prior art: if there are many icons on a main menu or desktop, and after the icons on the main menu or desktop are sorted according to initial letters, it is still difficult for a user to find a required program icon from the icons.

In order to enable persons skilled in the art to understand the technical solutions provided by embodiments of the present invention more clearly, the method for placing icons according to embodiments of the present invention is described in detail by using specific embodiments.

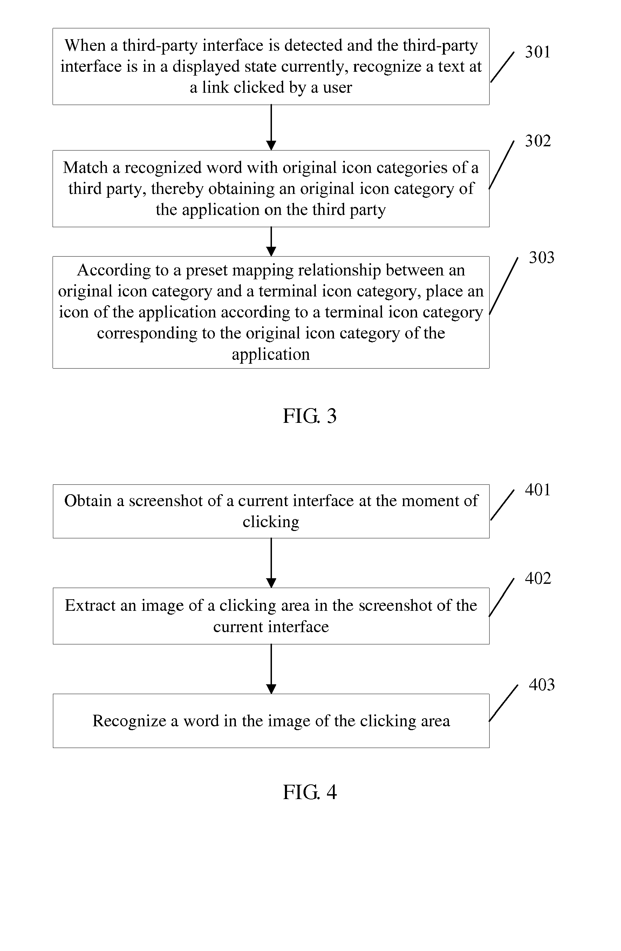

FIG. 3 shows a method for placing icons according to another embodiment of the present invention, which is used on a mobile phone terminal, where the mobile phone terminal uses the Android system. The method includes:

Step 301: When a third-party interface is detected and the third-party interface is in a displayed state currently, recognize a text at a link clicked by a user.

Because the Android system supports multiple programs running on the background, to ensure that the one occupying the screen is a third-party interface, the text at the link clicked by the user is recognized when the third-party interface is detected and the third-party interface is in a displayed state currently. The detection function is related to a state of a screen display process of the terminal, and may be obtained by using relevant software. In the embodiment, the third party may be google market, and the terminal software may be used to detect that the google market application is started and is in the displayed state currently, that is, the screen displays the interface of google market currently.

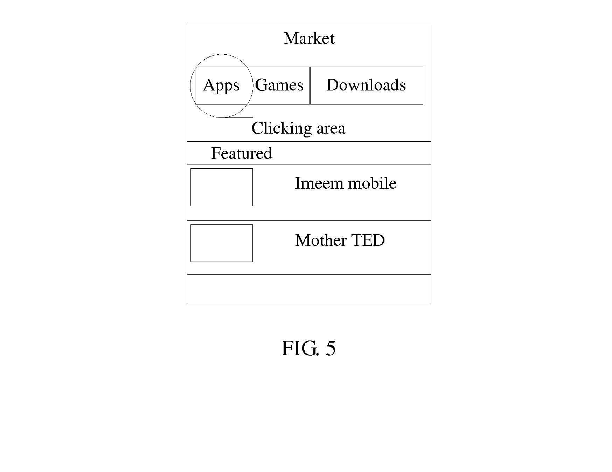

Further, as shown in FIG. 4 and FIG. 5, in the embodiment, the recognizing the text at the link clicked by the user specifically includes:

Step 401: Obtain a screenshot of a current interface at the moment of clicking.

Step 402: Extract an image of a clicking area in the screenshot of the current interface.

Step 403: Recognize a word in the image of the clicking area.

In the step 401, the screenshot of the current interface shown in FIG. 5 is obtained. In FIG. 5, Apps is the clicking area. Therefore, the image of the clicking area in FIG. 5 may be extracted, and then the word in the image is recognized, that is, the word Apps is recognized.

Specifically, when the google market interface is detected and the google market interface is in the displayed state currently, the terminal is triggered to perform word recognition. After the terminal is triggered to perform word recognition, a text at a link clicked by the user in every interface is recognized until the system has a new download task.

Step 302: Match the recognized word with original icon categories of the third party, thereby obtaining an original icon category of the application on the third party.

In the embodiment, the recognized word is matched with original icon categories of the third party. If the matching is successful, the matched word of the original icon category of the third party is stored; a result of re-recognizing and re-matching because of interface jumping will replace the word that has been stored before, until a download task of a new application appears in the system; and the word newly stored is used as the original icon category of the application on the third party. If the matching fails, the word newly stored is stored in a newly created "new class" ("new class").

It should be noted that the matching the recognized word and the original icon categories of the third party is: determining whether the recognized word includes a noun in a category name in the original icon categories of the third party. For example, if the recognized words are "intelligent game", and the original classification of the third party includes a "Games" class, the word "game" in the "intelligent game" matches "Games" in the original classification of the third party, that is, the matching is successful. The word "game" is stored.

Step 303: According to a preset mapping relationship between an original icon category of the third party and a terminal icon category, place the icon of the application according to a terminal icon category corresponding to the original icon category of the application.

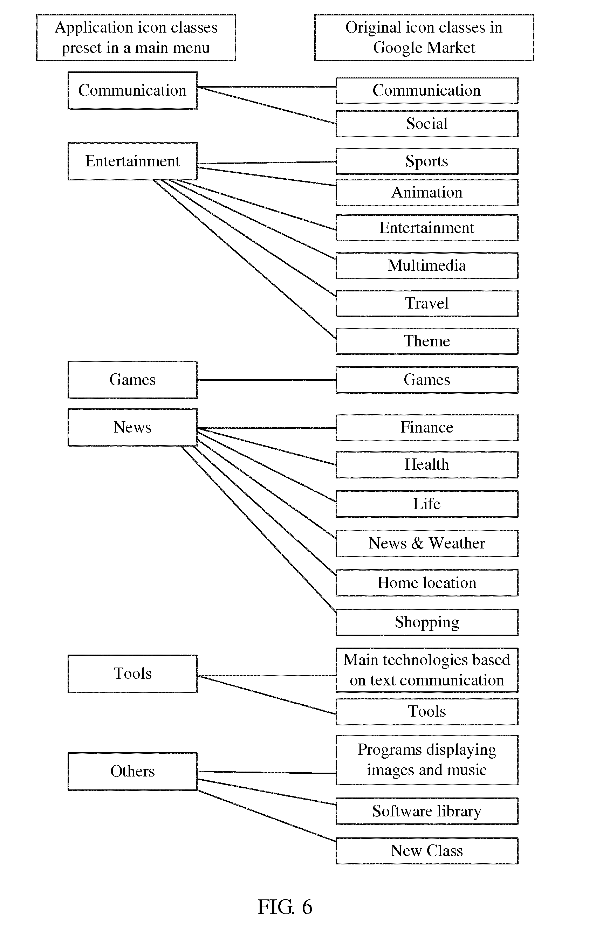

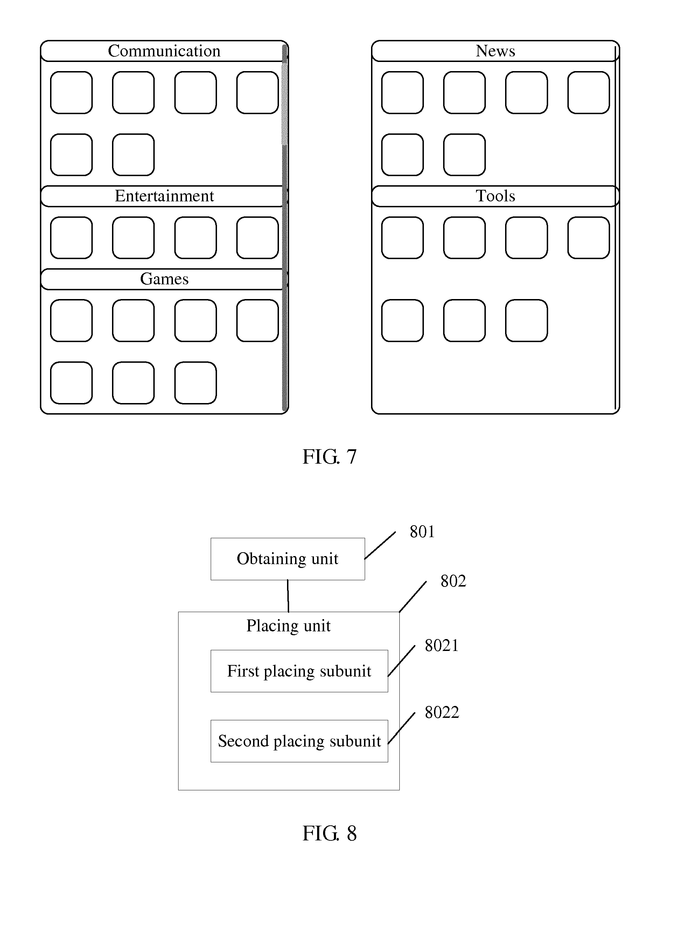

In the embodiment, when the third party is google market, a mapping relationship shown in FIG. 6 may be established. By using this mapping relationship, the icon of the application is placed according to the terminal icon category corresponding to the original icon category of the application. In search of icons, the icons may be displayed on the screen in a mode shown in FIG. 7.

In the embodiment of the present invention, a method for placing icons is provided to place an icon of an application according to a terminal icon category corresponding to a characteristic value of the application according to a preset mapping relationship between a characteristic value and a terminal icon category, so that icons are placed on a menu or desktop according to terminal icon categories. Therefore, an icon may be found according to the terminal icon category when it is looked for, a range for looking for the icon is reduced, and the time for looking for the icon is reduced, thereby solving the following problem in the prior art: if there are many icons on a main menu or desktop, and after the icons on the main menu or desktop are sorted according to initial letters, it is still difficult for a user to find a required program icon from the icons.

As shown in FIG. 8, an apparatus for placing icons according to an embodiment of the present invention includes:
an obtaining unit 801 configured to obtain a characteristic value of an application downloaded from a third party, where the characteristic value may be an original icon class of the application on the third party, or be an original classification path of the application on the third party. For the specific implementation method, reference may be made to step 201 shown in FIG. 2, and no repeated description is provided herein.

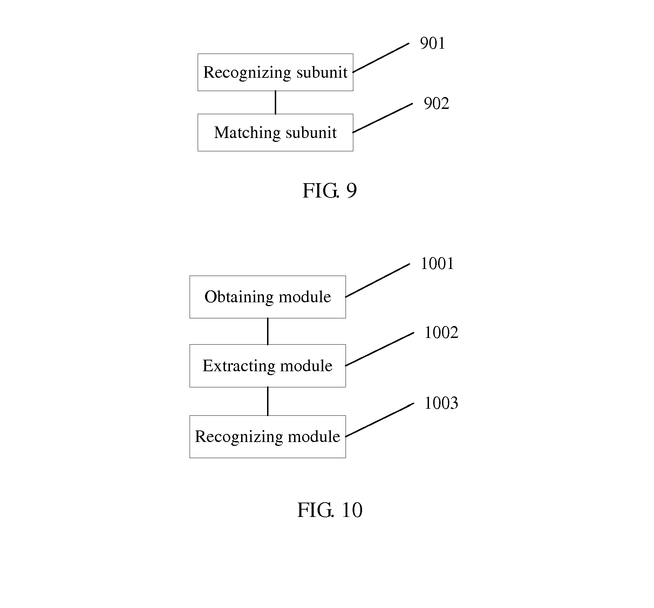

In the embodiment, as shown in FIG. 9, the obtaining unit includes:
a recognizing subunit 901 configured to recognize a text at a link clicked by a user, when a third-party interface is detected and the third-party interface is in a displayed state currently. For the specific implementation method, reference may be made to step 301 shown in FIG. 3, and no repeated description is provided herein.

In the embodiment, as shown in FIG. 10, the recognizing subunit includes:
an obtaining module 1001 configured to obtain a screenshot of a current interface at the moment of clicking. For the specific implementation method, reference may be made to step 401 shown in FIG. 3, and no repeated description is provided herein;
an extracting module 1002 configured to extract an image of a clicking area in the screenshot of the current interface obtained by the obtaining module. For the specific implementation method, reference may be made to step 402 shown in FIG. 4, and no repeated description is provided herein; and
a recognizing module 1003 configured to recognize a word in the image of the clicking area extracted by the extracting module. For the specific implementation method, reference may be made to step 403 shown in FIG. 4, and no repeated description is provided herein.

A matching subunit 902 is configured to match the word recognized by the recognizing subunit with original icon categories of the third party. For the specific implementation method, reference may be made to step 302 shown in FIG. 3, and no repeated description is provided herein.

A placing unit 802 is configured to place, according to a preset mapping relationship between a characteristic value and a terminal icon category, an icon of the application according to a terminal icon category corresponding to the characteristic value of the application obtained by the obtaining unit.

In the embodiment, the placing unit 802 includes:
a first placing subunit 8021 configured to place, according to a preset mapping relationship between an original icon category and a terminal icon category, the icon of the application according to a terminal icon category corresponding to the original icon category of the application obtained by the obtaining unit; and/or
a second placing subunit 8022 configured to place, according to a preset mapping relationship between an original classification path of a third party and a terminal icon category, the icon of the application obtained by the obtaining unit according to a terminal icon category corresponding to the original classification path of the third party.

For the specific implementation method, reference may be made to step 202 shown in FIG. 2, and no repeated description is provided herein.

In the embodiment of the present invention, an apparatus for placing icons is provided to place an icon of an application according to a terminal icon category corresponding to a characteristic value of the application according to a preset mapping relationship between a characteristic value and a terminal icon category, so that icons are placed on a menu or desktop according to terminal icon categories. Therefore, an icon may be found according to the terminal icon category when it is looked for, a range for looking for the icon is reduced, and the time for looking for the icon is reduced, thereby solving the following problem in the prior art: if there are many icons on a main menu or desktop, and after the icons on the main menu or desktop are sorted according to initial letters, it is still difficult for a user to find a required program icon from the icons.

In order to enable persons skilled in the art to have a better understanding of the technical solutions of the present invention, a mobile phone terminal which is capable of placing an icon is described in detail.

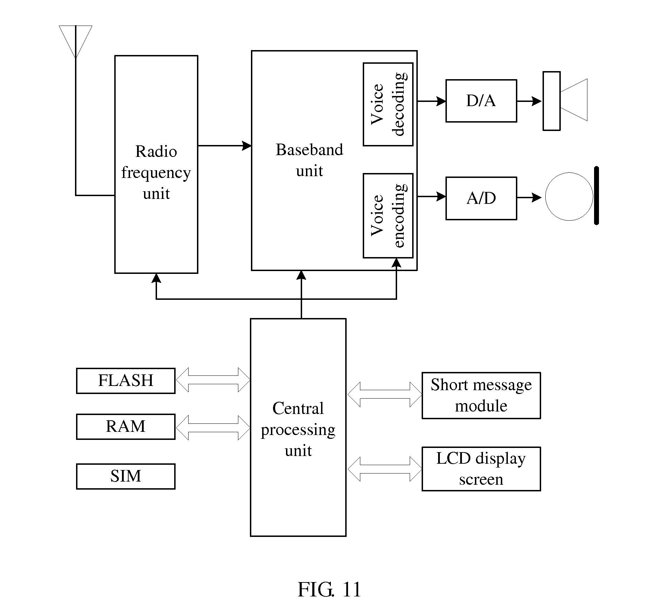

As shown in FIG. 11, a mobile phone terminal mainly includes a central processing unit, a radio frequency unit, and a baseband circuit, where the radio frequency unit and the baseband circuit are coupled with the central processing unit. In addition, a conventional mobile phone terminal further includes a SIM card, a storage apparatus (such as flash and RAM), a short message module, and an LCD display screen, which are connected to the central processing unit. The central processing unit is provided with an obtaining unit and a placing unit, where the obtaining unit is configured to obtain a characteristic value of an application downloaded from a third party, and the placing unit is configured to place, according to a preset mapping relationship between a characteristic value and a terminal icon category, an icon of the application according to a terminal icon category corresponding to the characteristic value of the application obtained by the obtaining unit. In addition, the storage apparatus stores the mapping relationship between a characteristic value and a terminal icon category. Structures and specific implementation modes of the obtaining unit and the placing unit are basically the same as those of the obtaining unit and the placing unit shown in FIG. 8 to FIG. 10, and will not be described repeatedly one by one herein.

In the embodiment of the present invention, a mobile phone terminal for placing icons is provided to place an icon of an application according to a terminal icon category corresponding to a characteristic value of the application according to a preset mapping relationship between a characteristic value and a terminal icon category, so that icons are placed on a menu or desktop according to terminal icon categories. Therefore, an icon may be found according to the terminal icon category when it is looked for, a range for looking for the icon is reduced, and the time for looking for the icon is reduced, thereby solving the following problem in the prior art: if there are many icons on a main menu or desktop, and after the icons on the main menu or desktop are sorted according to initial letters, it is still difficult for a user to find a required program icon from the icons.

The method and the apparatus for placing icons according to the embodiments of the present invention may be used to place a downloaded icon on a desktop and main menu in a handheld terminal device.

Persons of ordinary skill in the art may understand that all or a part of the steps of the methods in the embodiments may be implemented by a program instructing relevant hardware. The program may be stored in a computer readable storage medium, such as a ROM/RAM, a magnetic disk, or an optical disk.

The foregoing descriptions are merely specific embodiments of the present invention, but are not intended to limit the protection scope of the present invention. Any variation or replacement readily figured out by persons skilled in the art within the technical scope disclosed in the present invention shall all fall within the protection scope of the present invention. Therefore, the protection scope of the present invention shall be subject to the protection scope of the claims.

## Claims

1. A method for placing icons, comprising:
obtaining a characteristic value of an application downloaded from a third party; and
according to a preset mapping relationship between a characteristic value and a terminal icon category, placing icons of the application according to a terminal icon category corresponding to the characteristic value of the application.

2. The method according to claim 1, wherein the characteristic value comprises an original icon category of the application on the third party, and the placing, according to a preset mapping relationship between a characteristic value and a terminal icon category, an icon of the application according to a terminal icon category corresponding to the characteristic value of the application comprises:
according to the preset mapping relationship between an original icon category and a terminal icon category, placing the icon of the application according to a terminal icon category corresponding to the original icon category of the application.

3. The method according to claim 2, wherein when the characteristic value is an original icon category of the application on the third party, the obtaining the characteristic value of the application downloaded from the third party comprises:
when a third-party interface is detected and the third-party interface is in a displayed state currently, recognizing a text at a link clicked by a user; and
matching a recognized word with the original icon categories of the third party.

4. The method according to claim 3, wherein the recognizing a text at a link clicked by a user comprises:
obtaining a screenshot of a current interface at the moment of clicking;
extracting an image of a clicking area in the screenshot of the current interface; and
recognizing a word in the image of the clicking area.

5. The method according to claim 1, wherein the characteristic value comprises an original classification path of the application on the third party, and the placing, according to a preset mapping relationship between a characteristic value and a terminal icon category, an icon of the application according to a terminal icon category corresponding to the characteristic value of the application comprises:
according to a preset mapping relationship between original classification paths and terminal icon categories, placing the icon of the application according to a terminal icon category corresponding to the original classification path of the application.

6. An apparatus for placing icons, comprising:
an obtaining unit configured to obtain a characteristic value of the application downloaded from a third party; and
a placing unit configured to place, according to a preset mapping relationship between a characteristic value and a terminal icon category, an icon of the application according to a terminal icon category corresponding to the characteristic value of the application obtained by the obtaining unit.

7. The apparatus according to claim 6, wherein the characteristic value comprises an original icon category of the application on the third party, and
the placing unit comprises:
a first placing subunit configured to place, according to a preset mapping relationship between an original icon category and a terminal icon category, the icon of the application according to a terminal icon category corresponding to the original icon category of the application obtained by the obtaining unit.

8. The apparatus according to claim 7, wherein when the characteristic value is an original icon category of the application on the third party, the obtaining unit comprises:
a recognizing subunit configured to recognize a text at a link clicked by a user, when a third-party interface is detected and the third-party interface is in a displayed state currently; and
a matching subunit configured to match a word recognized by the recognizing subunit with original icon categories of the third party.

9. The apparatus according to claim 8, wherein the recognizing subunit comprises:
an obtaining module configured to obtain a screenshot of a current interface at the moment of clicking;
an extracting module configured to extract an image of a clicking area in the screenshot of the current interface obtained by the obtaining module; and
a recognizing module configured to recognize a word in the image of the clicking area extracted by the extracting module.

10. The apparatus according to claim 6, wherein the characteristic value comprises an original classification path of the application on the third party, and
the placing unit comprises:
a second placing subunit configured to place, according to a preset mapping relationship between an original classification path of the third party and a terminal icon category, the icon of the application obtained by the obtaining unit according to a terminal icon category corresponding to the original classification path of the third party.
